# EUROPÄISCHE PATENTANMELDUNG

(11) **EP 2 958 002 A1**
(43) Veröffentlichungstag der Anmeldung: **23.12.2015**
(21) Anmeldenummer: 15401051.6
(22) Anmeldetag: 01.06.2015
(51) Int. Cl.: G06F 3/048, A01D 41/127

(54) **BEDIENTERMINAL EINER LANDWIRTSCHAFTLICHEN ARBEITSMASCHINE**

(30) Priorität: 18.06.2014 DE 102014108559
(71) Anmelder: Amazonen-Werke H. Dreyer GmbH & Co. KG, 49205 Hasbergen (DE)
(72) Erfinder: SIA, Tim-Randy, 49179 Ostercappeln (DE)

(57) **Zusammenfassung**

Bedienterminal einer landwirtschaftlichen Arbeitsmaschine, umfassend ein Display, dadurch gekennzeichnet, dass das Bedienterminal ausgebildet ist, Text enthaltende Dateien auf dem Display wiederzugeben und ein Verfahren zum Betreiben eines Bedienterminals einer landwirtschaftlichen Arbeitsmaschine.

## Beschreibung

Die vorliegende Erfindung betrifft einen Bedienterminal einer landwirtschaftlichen Arbeitsmaschine mit einem Display sowie ein Verfahren zum Betreiben eines Bedienterminals einer Arbeitsmaschine.

Bedienterminals für landwirtschaftliche Arbeitsmaschinen sind aus dem Stand der Technik hinreichend bekannt. Diese Bedienterminals werden üblicherweise dazu eingesetzt, für die Landwirtschaft relevante Programme (Erfassung des aktuellen Orts der landwirtschaftlichen Arbeitsmaschine oder der Betriebsparameter des verwendeten Arbeitsgeräts) zu steuern und die Programmausgabe anzeigen zu lassen, wie z.B. die aktuelle Position des Arbeitsgeräts. Bei den von dem Programm ausgegebenen Daten handelt es sich jedoch für gewöhnlich um transiente Daten, die nur vorübergehend zum Zweck der Anzeige gespeichert werden.

Diesen Bedienterminals mangelt es daher an Flexibilität, was ihren Nutzen für den Bediener nur auf die für den Betrieb der Arbeitsmaschine notwendigen Programme beschränkt.

Es ist daher Aufgabe der vorliegenden Erfindung, ein Bedienterminal bereitzustellen, das eine wesentlich umfangreichere Einsetzbarkeit aufweist und insbesondere eine Arbeitserleichterung für den Bediener mit sich bringen kann.

Diese Aufgabe wird erfindungsgemäß durch das Bedienterminal nach Anspruch 1 und das Verfahren zum Betreiben eines Bedienterminals einer landwirtschaftlichen Arbeitsmaschine nach Anspruch 8 gelöst. Vorteilhafte Weiterbildungen der Erfindung sind in den Unteransprüchen erfasst.

Das erfindungsgemäße Bedienterminal ist dadurch gekennzeichnet, dass das Bedienterminal ausgebildet ist, Text enthaltende Dateien auf dem Display wiederzugeben. Unter dem Begriff der Datei sind prinzipiell persistente Daten, d.h. also ein Datenpaket, das beispielsweise für lange Zeit in einem Speicher hinterlegt werden kann, zu verstehen, im Gegensatz zu den aus dem Stand der Technik bereits bekannten transienten Daten, die nur innerhalb eines Programmzyklus verwendet und angezeigt werden. Das erfindungsgemäße Bedienterminal ist somit in der Lage, einem Anwender auch Hilfestellungen bereitzustellen, beispielsweise indem ein Handbuch aufgerufen und nach bestimmten Schlagworten durchsucht werden kann.

In einer Ausführungsform umfasst das Bedienterminal weiterhin wenigstens ein Bedienelement umfasst, wobei das Bedienterminal ausgebildet ist, eine Interaktion mit den auf dem Display wiedergegebenen Dateien über das wenigstens eine Bedienelement zu ermöglichen. Diese Ausführungsform gestattet es dem Bediener, nicht nur Text enthaltende Dateien zu betrachten, sondern auch mit ihnen zu interagieren, sie beispielsweise zu ändern oder zu bearbeiten.

Es ist vorteilhaft, wenn das Bedienterminal wenigstens eins der folgenden Dateiformate wiedergeben kann: PDF, .doc, HTML, XML, .xlsx, .xlsm, JavaScript, Flash, und/oder das Bedienelement Interaktion mit wenigstens einem der folgenden Dateiformate ermöglicht: PDF, .doc, HTML, XML, .xlsx, .xlsm, JavaScript, Flash. Bevorzugt ist, wenn möglichst viele Dateiformate von dem Bedienterminal angezeigt werden können und gegebenenfalls eine entsprechende Interaktion mit diesen Dateiformaten möglich ist. Mit Hinblick auf Bedienhilfen für den Bediener kann es jedoch ausreichend sein, wenn nur einige dieser Dateiformate, insbesondere PDF, anzeigbar und gegebenenfalls bearbeitbar sind.

Es kann ferner vorgesehen sein, dass dem Bedienterminal ein GSM-Modul zugeordnet ist, das geeignet ist eine Verbindung zum Internet herzustellen und/oder dass dem Bedienterminal ein WLAN-Modul zugeordnet ist, das eine Verbindung zu einem WLAN-Netzwerk herstellen kann. Es ist mit Hilfe des Bedienterminals so auch möglich, unerwartet benötigte Informationen abzurufen oder gegebenenfalls sogar Emails zu verschicken, falls dies im Rahmen der Arbeit auf dem Feld mit der landwirtschaftlichen Arbeitsmaschine erforderlich ist.

In einer bevorzugten Weiterbildung dieser Ausführungsform ist, das Bedienterminal dadurch gekennzeichnet, dass das Display ausgebildet ist, Internetseiten anzuzeigen und über das wenigstens eine Bedienelement mit der Internetseite interagiert werden kann. Neben beispielsweise bereits gespeicherten Bedienhandbüchern kann der Bediener im Zweifelsfall so sogar auf das Internet als Informationsquelle zurückgreifen, was bei eventuell auftretenden Problemen während der Bearbeitung eines Feldes hilfreich sein kann.

In einer weiteren Ausführungsform ist vorgesehen, dass das Bedienterminal eine alphanumerische Tastatur und ein weiteres Bedienelement zum Bedienen eines auf dem Display anzeigbaren Cursors umfasst, wobei über die alphanumerische Tastatur und das weitere Bedienelement mit den Dateien interagiert werden kann. Diese Ausführungsform ermöglicht es, sowohl beispielsweise Text in Dokumente einzugeben als auch mit Hilfe eines üblicherweise verwendeten Cursors schnell durch Text enthaltende Dateien zu navigieren.

In einer vorteilhaften Ausführungsform des Bedienterminals ist vorgesehen, dass dem Bedienterminal ein Spracherkennungsmodul zugeordnet ist, wobei das Spracherkennungsmodul ausgebildet ist, durch Sprache eingegebene Befehle in eine Interaktion mit den Dateien umzusetzen. Diese Ausführungsform vereinfacht die Interaktion mit dem Bedienterminal und ermöglicht es dem Fahrer der landwirtschaftlichen Arbeitsmaschine, stets den Arbeitsablauf aufmerksam zu verfolgen.

Das erfindungsgemäße Verfahren zum Betreiben eines Bedienterminals einer landwirtschaftlichen Arbeitsmaschine ist dadurch gekennzeichnet, dass auf einem Display des Bedienterminals Text enthaltende Dateien wiedergegeben werden. Mit diesem Verfahren kann die landwirtschaftliche Arbeitsmaschine und insbesondere das Bedienterminal deutlich flexibler eingesetzt werden.

In einer Weiterbildung kann über wenigstens ein Bedienelement mit den Dateien interagiert werden. Mit dieser Ausführungsform wird gewährleistet, dass der Bediener die Dateien nicht nur betrachten sondern, falls erforderlich, auch mit ihnen interagieren kann.

Es kann vorgesehen sein, dass eine Datei in wenigstens einem der folgenden Dateiformate wiedergegeben wird: PDF, .doc, HTML, XML, .xlsx, .xlsm, JavaScript, Flash; und/oder dass mit einer Datei in wenigstens einem der folgenden Dateiformate interagiert wird: PDF, .doc, HTML, XML, .xlsx, .xlsm, JavaScript, Flash. Das Wiedergeben und das Bereitstellen einer Möglichkeit zum Interagieren mit möglichst vielen Dateiformaten erhöht die Flexibilität mit Hinblick auf das Betreiben des Bedienterminals.

In einer weiteren Ausführungsform ist das Verfahren dadurch gekennzeichnet, dass das Bedienterminal über ein GSM-Modul eine Verbindung mit dem Internet herstellt und/oder dass das Bedienterminal über ein WLAN-Modul eine Verbindung zu einem WLAN-Netzwerk herstellt. So wird der Abruf von zusätzlichen Informationen aus dem Internet als Informationsquelle oder das Abrufen und Versenden von Emails, falls zweckdienlich, ermöglicht.

In einer bevorzugten Weiterbildung dieser Ausführungsform ist das Verfahren weiterhin dadurch gekennzeichnet, dass wenigstens eine Text enthaltende Datei vom Bedienterminal in das Internet und/oder das Netzwerk hochgeladen oder runtergeladen wird.

Weiterhin kann vorgesehen sein, dass auf dem Display eine Internetseite angezeigt wird und mit der Internetseite interagiert wird. Die Darstellung von Internetseiten erleichtert die gezielte Informationssuche im Internet.

In einer Ausführungsform des Verfahrens wird mit der Datei über eine alphanumerische Tastatur und ein weiteres Bedienelement zum Bewegen eines auf dem Display angezeigten Cursors interagiert. Die Interaktion mit dem Bedienterminal wird so maßgeblich erleichtert, insbesondere mit Hinblick auf Text enthaltende Dateien.

Es kann auch vorteilhaft sein, wenn mittels eines Spracherkennungsmoduls ein über Sprache eingegebener Befehl in eine Interaktion mit der Datei übersetzt wird. Die Möglichkeit der Spracherkennung erleichtert die Interaktion mit dem Bedienterminal.

In einer Ausführungsform ist ferner vorgesehen, dass die Interaktion mit der Text enthaltenden Datei wenigstens eines von Betrachten, scrollen, markieren, ändern, Text eingeben, Text kopieren, Grafik einfügen, Grafik kopieren, versenden, empfangen umfasst. Es ist dem Bediener so auf vielfältige Art und Weise möglich, mit den Textdateien zu interagieren, was den Nutzen des Bedienterminals erheblich steigert.
- Fig. 1a+b: Schematische Darstellung eines Bedienterminals gemäß einer Ausführungsform.
- Fig. 2a+b: Schematische Darstellung einer weiteren Ausführungsform eines Bedienterminals.

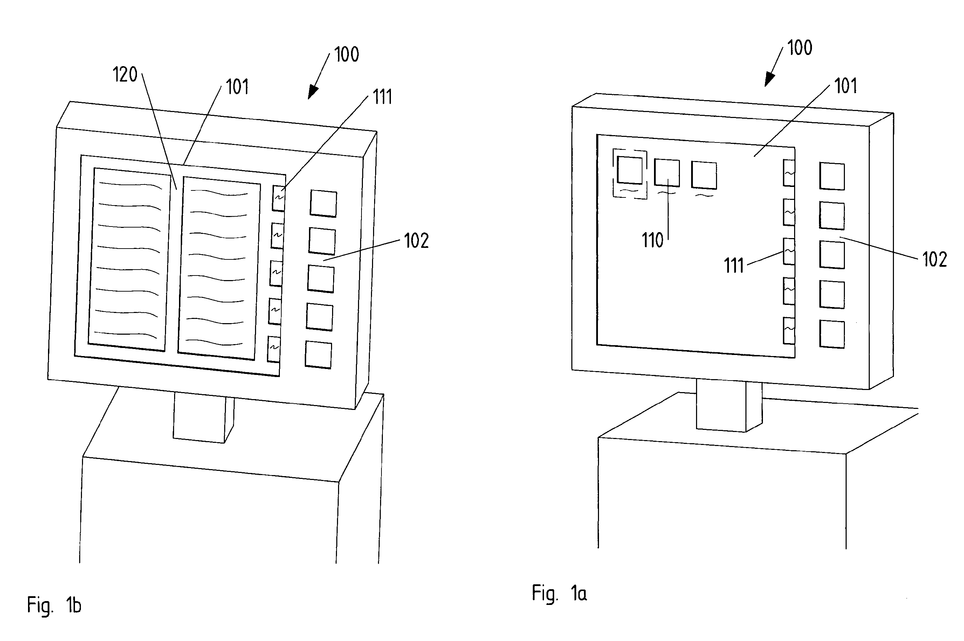

Fig. 1a zeigt ein erfindungsgemäßes Bedienterminal 100, wie es in einer landwirtschaftlichen Arbeitsmaschine zum Einsatz kommen kann. Dieses Bedienterminal umfasst zumindest ein Display 101, das prinzipiell dazu geeignet ist, von einem Prozessor oder Grafikchip übertragene Informationen darzustellen. Dazu zählen beispielsweise Bilder, Karten, die geografische Informationen wiedergeben oder Textbausteine wie Zahlen, Buchstaben, Wörter oder Ähnliches.

Bisherige Bedienterminals sind dabei so ausgebildet, dass sie zur Darstellung eines bestimmten Programms, das für den aktuellen Betrieb einer landwirtschaftlichen Arbeitsmaschine relevante Informationen wiedergibt, geeignet sind. Dazu umfassen die Bedienterminals 100 beispielsweise einen Speicher für das Programm und einen Prozessor, der beispielsweise Informationen von verschiedenen Sensoren auf Grundlage des Programmcodes auswerten kann. Die so gewonnen Informationen können auf dem Display 101 als transiente Informationen angezeigt werden. Darunter versteht sich, dass beispielsweise die aktuelle Geschwindigkeit oder der aktuelle Ort der Landwirtschaftsmaschine oder die momentane Menge des ausgebrachten Materials, wie Dünger oder Saatgut, auf dem Display angezeigt wird. Diese Daten werden in Echtzeit oder annähernd Echtzeit erfasst, jedoch immer wieder von neuen gewonnenen Daten überschrieben. Es werden so üblicherweise stets die aktuellen Betriebsdaten angezeigt. Zwar ist es möglich, mit dem Bedienterminal 100 und einem diesem zugeordneten Speicher oder in diesem integrierten Speicher sämtliche gewonnenen Daten abzuspeichern und beispielsweise über eine USB-Schnittstelle mit Hilfe eines USB-Sticks zu exportieren, jedoch können diese Daten bei Betrieb der Arbeitsmaschine nicht weiter verfolgt werden.

Erfindungsgemäß ist daher vorgesehen, dass das Bedienterminal über die Möglichkeit verfügt, auch persistente Dateien, insbesondere Dateien in Textformat oder Dateien, die Text umfassen, auf einer entsprechenden Benutzeroberfläche anzuzeigen. Bevorzugt ist, wenn von dieser Benutzeroberfläche aus zwischen Dateien und Programmen, die für den Betrieb der Arbeitsmaschine wichtige Information wiedergeben, hin und her gewechselt werden kann. Dazu kann beispielsweise, wie in Fig. 1a dargestellt, vorgesehen sein, dass es zusätzlich zu der üblichen Programmoberfläche einen "Desktop" gibt, der von dem Display 101 angezeigt werden kann und auf dem Dateien 110 abgelegt sein können.

Diese Dateien können dann beispielsweise über Navigation mit Hilfe von bestimmten Bedienelementen 102, denen entweder fixe oder multifunktionale Eigenschaften zukommen, ausgewählt und angezeigt werden. Ist vorgesehen, dass jedem Bedienelement 102 eine bestimmte Eigenschaft zukommt, die nicht veränderbar ist, so kann das Bedienelement entsprechend seiner Funktion beschriftet sein. Ist jedoch vorgesehen, dass die Bedienelemente 102 mit verschiedenen Funktionen (multifunktional), beispielsweise kontextabhängig belegt werden können, so kann weiterhin vorgesehen sein, dass das Display 101 ein Informationsfenster 111 den entsprechenden Funktionstasten 102 bzw. den Bedienelementen 102 zuordnen kann, worauf die aktuellen Funktionen der Bedienelemente 102 in dem entsprechenden Kontext ersichtlich sind, z.B. symbolisch oder durch konkrete Bezeichnung. In Fig. 1a kann beispielsweise vorgesehen sein, dass für vier der dargestellten Bedienelemente 102 Navigationsfunktionen vorgesehen sind, mit denen auf dem Display zumindest in begrenztem Umfang navigiert werden kann, so dass eines der Elemente 110, beispielsweise eine Datei oder ein Shortcut für ein Programm, das hier mit einer gestrichelten Umrandung dargestellt ist, ausgewählt werden kann. Das verbleibende Bedienelement kann dann beispielsweise zur Bestätigung der Auswahl verwendet werden.

Als Reaktion des Bedienterminals auf die Auswahl des entsprechenden Elements kann sich, wie in Fig. 1b dargestellt, dann eine Text enthaltende Datei 120 öffnen. Bei dieser Datei kann es sich beispielsweise um eine PDF-Datei oder eine Microsoft-Word-Datei (.doc-Datei) oder andere Dateiformate, die Text enthalten, handeln. Es kann auch vorgesehen sein, dass nicht nur Text enthaltende Dateien auf dem Display angezeigt werden können sondern auch Videos oder Bilder oder Grafiken. In jedem Fall handelt es sich bei den Dateien um persistente, also beispielsweise in einem internen Speicher des Bedienterminals 100 abgelegte Dateien.

Die in Fig. 1a erwähnten Bedienelemente 102 können in dem Kontext, der in Fig. 1 b dargestellt ist, d.h. also in dem Kontext eines Textdokuments, andere Aufgaben erfüllen bzw. andere Funktionalitäten aufweisen, die über die Informationsfenster 111 zugeordnet sind. Auch hier kann vorgesehen sein, dass mit einem oder mehreren der Bedienelemente 102 eine Navigation durch das Dokument, beispielsweise Umblättern, möglich ist.

Es ist grundsätzlich bevorzugt, wenn auch nicht notwendig, dass neben dem bloßen Öffnen von Text enthaltenden Dateien auch eine Interaktion mit den Dateien bzw. mit dem darin enthaltenen Text oder den darin enthaltenen Objekten (Videos, Bilder, Grafiken usw.) möglich ist. Dazu reicht jedoch üblicherweise eine so begrenzte Anzahl an Bedienelementen, wie sie in Fig. 1a und 1 b dargestellt sind nicht aus, weshalb vorgesehen sein kann, dass zusätzliche Bedienelemente bereitgestellt werden.

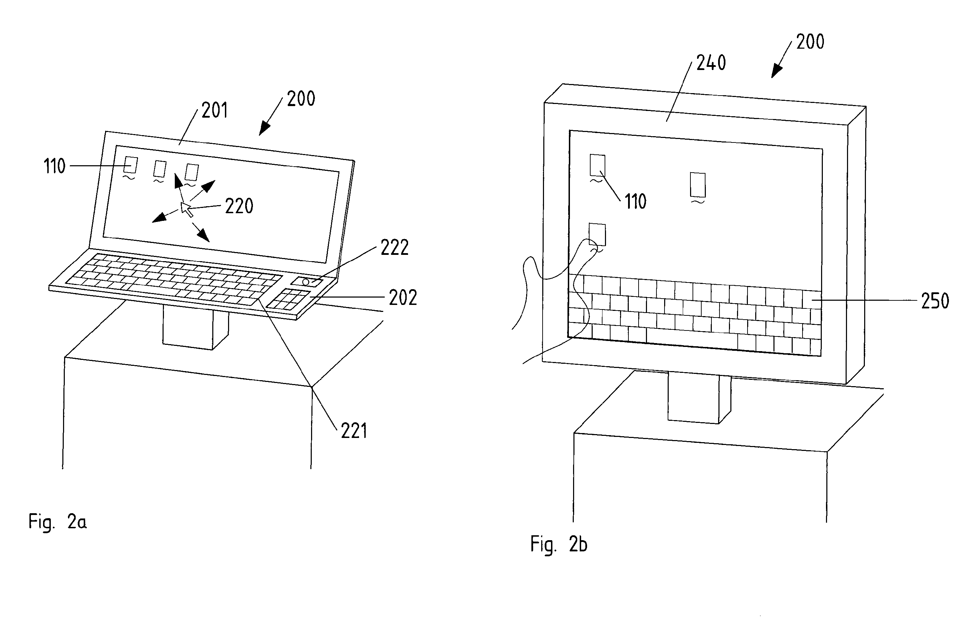

Dazu zeigen Fig. 2a und 2b entsprechende Ausführungsformen.

In Fig. 2a ist ein weiteres Bedienterminal 200 dargestellt, wobei diesem ein Bedienelement 202, umfassend eine Tastatur, vorzugsweise eine alphanummerische Tastatur 221, zugeordnet ist. Diese kann wie übliche Tastaturen ausgebildet sein, ist aber vorzugsweise fest mit dem eigentlichen Bedienterminal 200 bzw. insbesondere mit dem Display 201 verbunden, so dass hier keine Gefährdung durch eine in der landwirtschaftlichen Arbeitsmaschine umherliegende Tastatur bestehen kann. Das Bedienelement 202 kann neben der Tastatur 221 ein weiteres Bedienelement 222 umfassen, das zur Bewegung bzw. Steuerung eines Cursors 220 auf dem Display 201 in den dargestellten Pfeilrichtungen, also in der gesamten Ebene des Displays, geeignet ist. Dieses weitere Bedienelement 222 kann beispielsweise eine Maus oder ein Track-Ball sein, wobei das Bedienterminal 200 dann so ausgebildet ist, dass eine Bewegung des weiteren Bedienelements 222 in eine Bewegung des Cursors 220 übersetzt werden kann. Das Vorsehen einer vollständigen Tastatur und eines entsprechenden weiteren Bedienelements erlaubt, die Vorteile des erfindungsgemäßen Bedienterminals 200 weiter auszubauen. So ist es in einer Ausführungsform möglich, nicht nur Text enthaltende Dateien anzuzeigen und eventuell durch diese zu navigieren, sondern auch, mit diesen auf einer höheren Ebene zu interagieren. Dazu zählt beispielsweise, dass die Text enthaltenden Dateien zumindest abschnittsweise markiert oder geändert werden können. Vorteilhaft ist, wenn über die Tastatur 221 auch Text eingegeben werden kann oder kopiert und in ein weiteres Dokument eingefügt werden kann. Weiterhin ist von Vorteil, wenn es ebenfalls möglich ist, Grafiken oder Videos oder Links in ein entsprechendes Dokument hineinzukopieren oder aus diesem Dokument hinaus zu kopieren.

So ist eine Anwendungsmöglichkeit des erfindungsgemäßen Bedienterminals, dass beispielsweise Excel-Tabellen, wie sie zur Auswertung der Arbeitszyklen bei landwirtschaftlichen Arbeitsmaschinen zum Einsatz kommen können, bereits während der Fahrt ausgefüllt werden können. Dies erleichtert die Arbeit des Bedieners der Arbeitsmaschine, da er Auswertungen des Arbeitsprozesses bereits auf dem Feld vornehmen kann oder beispielsweise von den Sensoren aufgenommene Daten auf dem Display in einer Excel-Datei oder einem anderen Dateiformat anzeigen kann und gegebenenfalls bei Nichtplausibilität berichtigen oder grundsätzlich weiter bearbeiten kann, indem er sich z.B. zusätzliche Ergebnisse ausgeben lässt. Da es sich bei den Text enthaltenden Dateien um persistente Dateien handelt, die beispielsweise in einem dem Bedienterminal 200 zugeordneten Speicher hinterlegt sind, kann der Bediener auf diese Daten auch später zugreifen oder sie mittels USB-Stick exportieren.

Besonders vorteilhaft ist, insbesondere dann, wenn durch entsprechende Bedienelemente ein hoher Grad an Interaktionsmöglichkeiten besteht, dass das Bedienterminal 200 über ein hier nicht dargestelltes GSM-Modul verfügt bzw. dem Bedienterminal ein entsprechendes GSM-Modul zugeordnet ist. Mit diesem GSM-Modul ist es dem Bedienterminal möglich, eine mobile Verbindung zum Internet aufzunehmen. Diese Verbindung kann beispielsweise genutzt werden, um dem Bediener Internetseiten anzuzeigen. Weiterhin kann der Bediener so Dokumente und Dateien, die Text enthalten (beispielsweise PDF-Dateien) aus dem Internet herunterladen. Dies ist insbesondere dann von Vorteil, wenn der Bediener, während er die landwirtschaftliche Arbeitsmaschine über das Feld fährt, auf Schwierigkeiten bei der Bearbeitung stößt, die mit dem verwendeten Arbeitsgerät zusammenhängen. Hier ist es besonders vorteilhaft, wenn direkt an Ort und Stelle, beispielsweise durch einen entsprechenden Download oder durch Aufruf des bereits im Speicher hinterlegten Handbuchs, eine Lösung für das Problem gefunden werden kann. So werden Arbeitszeitausfälle erheblich minimiert.

Weiterhin ermöglicht es der Internetanschluss, beispielsweise über gängige Email-Programme, Supportleistungen der Hersteller der landwirtschaftlichen Arbeitsmaschinen oder der Arbeitsgeräte möglichst zeitnah in Anspruch zu nehmen, indem beispielsweise per Email Kontakt aufgenommen wird. Dazu kann nicht nur die direkte Eingabe über einen Internetbrowser, sondern auch die Benutzung gängiger Email-Programme, wie beispielsweise Microsoft Outlook, vorteilhaft sein.

Es ist somit bevorzugt, wenn das Bedienterminal nicht nur geeignet ist, Dateien, die Text umfassen, zu öffnen und eventuell mit diesen zu interagieren, sondern wenn weitere Programme bereitgestellt sind, die eine umfangreichere Textbearbeitung und Dateibearbeitung ermöglichen.

Neben dem GSM-Modul oder alternativ dazu kann auch vorgesehen sein, dass das Bedienterminal ein WLAN-Modul umfasst oder ein WLAN-Modul dem Bedienterminal zugeordnet ist, wodurch es möglich ist, das Bedienterminal über eine drahtlose Verbindung mit beispielsweise dem Heimnetzwerk des Bedieners der landwirtschaftlichen Arbeitsmaschine zu verbinden. Da die Entfernung zum Heimnetzwerk (beispielsweise im Haus des Bauern) mehrere hundert Meter betragen kann, ist hierzu jedoch ein sehr leistungsfähiger WLAN-Sender und -Empfänger notwendig. Dieses Problem kann gelöst werden, indem an geeigneten Stellen gegebenenfalls Signalverstärker bereitgestellt werden. Die WLAN-Verbindung kann es gestatten, Dateien direkt vom Heimnetzwerk aus auf das Bedienterminal zu kopieren oder Dateien vom Bedienterminal an das Heimnetzwerk zu senden. Dies kann jedoch alternativ oder in Kombination dazu auch über das mobile Internet durchgeführt werden.

Die Ausführungsform gemäß Fig. 2a mit einer physischen Tastatur 221 und einem entsprechenden weiteren Bedienelement 222, wie beispielsweise einer Maus, ist nicht zwingend. Es kann auch vorgesehen sein, dass das Bedienterminal 200 über ein Touchdisplay 240 verfügt. Auf diesem können, wie bereits in den vorherigen Ausführungsformen, beispielsweise in Form eines Desktops oder einer Liste, auswählbare Dateien 110 angeordnet sein. Dazu zählen beispielsweise die beschriebenen Text enthaltenden Dateien aber auch Schnittstellen für Programme. Um eine Bedienung zu ermöglichen, kann das Touchdisplay 201 eine (kontextabhängige) Tastatur 250 bzw. allgemein ein Bedienelement 250, bereitstellen. Die Auswahl von Elementen auf dem Touchdisplay kann über Berührung erfolgen, was ein weiteres Bedienelement, wie in Fig. 2a (Maus oder Ähnliches) überflüssig macht. Die Eingabe kann dann über Berührung der Tastatur 250 erfolgen.

Eine weitere vorteilhafte Ausführungsform, die sowohl in Kombination mit denen gemäß Fig. 1 a bis 2b bereitgestellt werden kann, aber auch alternativ dazu ist das Bereitstellen eines Spracherkennungsmoduls, das entweder in dem Bedienteilelement 200 integriert ist oder diesem zugeordnet ist. Dieses Spracherkennungsmodul umfasst zumindest ein Mikrofon und ein entsprechend in einem Speicher hinterlegtes Spracherkennungsprogramm. Diese Ausführungsform ermöglicht es dem Bediener, mit den Funktionen des Bedienterminals aber insbesondere mit Hinblick auf die Text enthaltenden Dateien, zu interagieren, indem er Befehle per Spracheingabe eingibt, die von dem Spracherkennungsmodul letztlich in Befehle in Bezug auf die ausgewählten Dateien oder ausgewählten Programme umgesetzt wird. So kann der Bediener, beispielsweise durch entsprechende Spracheingabe, eine bestimmte Datei auswählen und anzeigen lassen oder er kann sie entfernen. Weiterhin ist es möglich, durch die Spracheingabe bestimmte Programme zu öffnen oder zwischen bestimmten Programmen zu wechseln. Ebenso kann letztlich mittels der Spracheingabe auch das Erstellen oder Bearbeiten von bereits vorhandenen Texten durchgeführt werden.

Grundsätzlich ist es im Sinne der Erfindung besonders vorteilhaft, wenn das Bedienterminal geeignet ist, möglichst viele unterschiedliche Dateiformate zu erkennen und zur Interaktion oder Darstellung bereitzustellen. Da es jedoch für die Arbeit auf einem Feld mit einer landwirtschaftlichen Arbeitsmaschine nicht notwendig ist, alle denkbaren Dateiformate ausgeben zu können, genügt es, wenn das Bedienterminal so ausgebildet ist, dass es zumindest PDF-Dateien anzeigen kann und eine Interaktion mit diesen PDF-Dateien in einem gewissen Rahmen gestattet. Dazu zählt insbesondere das Scrollen durch das gesamte Dokument und eventuell eine Stichwortsuche. Um diese Aufgaben zu erfüllen, muss das Bedienterminal nicht über eine sehr hohe Rechenleistung verfügen, was eine kostengünstige Realisierung ermöglicht. Je umfangreicher die Einsetzbarkeit des Bedienterminals gestaltet werden soll, desto größer muss aber auch der Speicher sein, und desto leistungsfähiger müssen die vorgesehenen Prozessoren, Grafikkarten und ähnliche Hardwarekomponenten ausgeführt sein.

## Patentansprüche

1. Bedienterminal (100) einer landwirtschaftlichen Arbeitsmaschine, umfassend ein Display (101), **dadurch gekennzeichnet, dass** das Bedienterminal (100) ausgebildet ist, Text enthaltende Dateien auf dem Display (101) wiederzugeben.

2. Bedienterminal (100) nach Anspruch 1, **dadurch gekennzeichnet, dass** das Bedienterminal (100) weiterhin wenigstens ein Bedienelement (102) umfasst, wobei das Bedienterminal (100) ausgebildet ist, eine Interaktion mit den auf dem Display (101) wiedergegebenen Dateien über das wenigstens eine Bedienelement (102) zu ermöglichen

3. Bedienterminal (100) nach Anspruch 1 oder 2, **dadurch gekennzeichnet, dass** das Bedienterminal wenigstens eins der folgenden Dateiformate wiedergeben kann: PDF, .doc, HTML, XML, .xlsx, .xlsm, JavaScript, Flash, und/oder dass das Bedienelement Interaktion mit wenigstens einem der folgenden Dateiformate ermöglicht: PDF, .doc, HTML, XML, .xlsx, .xlsm, JavaScript, Flash.

4. Bedienterminal (100) nach einem der Ansprüche 1 bis 3, **dadurch gekennzeichnet, dass** dem Bedienterminal (100) ein GSM-Modul zugeordnet ist, das geeignet ist eine Verbindung zum Internet herzustellen und/oder dass dem Bedienterminal ein WLAN-Modul zugeordnet ist, das eine Verbindung zu einem WLAN-Netzwerk herstellen kann.

5. Bedienterminal (100) nach Anspruch 5, **dadurch gekennzeichnet, dass** das Display (101) ausgebildet ist, Internetseiten anzuzeigen und über das wenigstens eine Bedienelement (102) mit der Internetseite interagiert werden kann.

6. Bedienterminal (200) nach einem der Ansprüche 1 bis 5, **dadurch gekennzeichnet, dass** das Bedienterminal eine alphanumerische Tastatur (221) und ein weiteres Bedienelement (222) zum Bedienen eines auf dem Display (201) anzeigbaren Cursors (220) umfasst, wobei über die alphanumerische Tastatur (221) und das weitere Bedienelement (222) mit den Dateien interagiert werden kann.

7. Bedienterminal (100) nach einem der Ansprüche 1 bis 6, **dadurch gekennzeichnet, dass** dem Bedienterminal (100) ein Spracherkennungsmodul zugeordnet ist, wobei das Spracherkennungsmodul ausgebildet ist, durch Sprache eingegebene Befehle in eine Interaktion mit den Dateien umzusetzen.

8. Verfahren zum Betreiben eines Bedienterminals (100) einer landwirtschaftlichen Arbeitsmaschine, **dadurch gekennzeichnet, dass** auf einem Display (101) des Bedienterminals Text enthaltende Dateien wiedergegeben werden.

9. Verfahren nach Anspruch 8, **dadurch gekennzeichnet, dass** über wenigstens ein Bedienelement (102) mit den Dateien interagiert wird.

10. Verfahren nach Anspruch 8 oder 9, **dadurch gekennzeichnet, dass** eine Datei in wenigstens einem der folgenden Dateiformate wiedergegeben wird: PDF, .doc, HTML, XML, .xlsx, .xlsm, JavaScript, Flash; und/oder dass mit einer Datei in wenigstens einem der folgenden Dateiformate interagiert wird: PDF, .doc, HTML, XML, .xlsx, .xlsm, JavaScript, Flash.

11. Verfahren nach einem der Ansprüche 8 bis 10, **dadurch gekennzeichnet, dass** das Bedienterminal (100) über ein GSM-Modul eine Verbindung mit dem Internet herstellt und/oder dass das Bedienterminal (100) über ein WLAN-Modul eine Verbindung zu einem WLAN-Netzwerk herstellt.

12. Verfahren nach Anspruch 11, **dadurch gekennzeichnet, dass** wenigstens eine Text enthaltende Datei vom Bedienterminal (100) in das Internet und/oder das Netzwerk hochgeladen oder runtergeladen wird.

13. Verfahren nach Anspruch 11 oder 12, **dadurch gekennzeichnet, dass** auf dem Display (101) eine Internetseite angezeigt wird und mit der Internetseite interagiert wird.

14. Verfahren nach einem der Ansprüche 8 bis 13, **dadurch gekennzeichnet, dass** mit der Datei über eine alphanumerische Tastatur (221) und ein weiteres Bedienelement (222) zum Bewegen eines auf dem Display angezeigten Cursors interagiert wird.

15. Verfahren nach einem der Ansprüche 8 bis 14, **dadurch gekennzeichnet, dass** mittels eines Spracherkennungsmoduls ein über Sprache eingegebener Befehl in eine Interaktion mit der Datei übersetzt wird.

16. Verfahren nach einem der Ansprüche 8 bis 15, **dadurch gekennzeichnet, dass** die Interaktion mit der Text enthaltenden Datei wenigstens eines von
Betrachten, scrollen, markieren, ändern, Text eingeben, Text kopieren, Grafik einfügen, Grafik kopieren, versenden, empfangen
umfasst.
